# EUROPÄISCHE PATENTANMELDUNG

(11) **EP 3 855 131 A1**
(43) Veröffentlichungstag der Anmeldung: **28.07.2021**
(21) Anmeldenummer: 20153037.5
(22) Anmeldetag: 22.01.2020
(51) Int. Cl.: G01D 11/30, B60Q 1/068

(54) **EINSTELLVORRICHTUNG ZUM VERSCHWENKEN ZUMINDEST EINES RELEVANTEN BAUTEILS FÜR EINEN KRAFTFAHRZEUGSCHEINWERFER**

(71) Anmelder: ZKW Group GmbH, 3250 Wieselburg (AT)
(72) Erfinder: Steinkellner, Johann, 3683 Yspertal (AT); Ederer, Lukas, 3382 Loosdorf (AT)
(74) Vertreter: Patentanwaltskanzlei Matschnig & Forsthuber OG

(57) **Zusammenfassung**

Einstellvorrichtung (10) zum Verschwenken zumindest eines relevanten Bauteiles (20) für einen Kraftfahrzeugschweinwerfer um eine erste und eine zweite Achse (X, Y), umfassend
- ein Halteelement (100) für ein relevante Bauteil (20), welches eine erste Gleitfläche (110) umfasst, welche als Teil einer Kugelfläche ausgebildet ist,
- einen Tragerahmen (200), welcher ein zweite Gleitfläche (210) umfasst, welche als Teil einer Kugelfläche ausgebildet ist, wobei das Halteelement (100) mittels einer Lagereinrichtung derart in dem Tragerahmen (200) gelagert ist, dass die erste Gleitfläche (110) des Halteelements (100) entlang der zweiten Gleitfläche (210) des Tragerahmens (200) um die erste und die zweite Achse (X, Y) verschiebbar ist,
- eine Justiereinrichtung (300), welche ein Einstellbauteil (301) und eine erste Verstelleinrichtung (310) und eine zweite Verstelleinrichtung (320) aufweist, welche jeweils an dem Einstellbauteil (301) angeordnet sind, welches mit dem Halteelement (100) mechanisch mittels eines Verbindungselements (400) verbunden ist, wobei das Verbindungselement (400) den Tragerahmen (200) über eine Öffnung (220) durchsetzt, wobei das Verbindungselement (400) dazu eingerichtet ist, eine Bewegung des Einstellbauteils (301) auf das Halteelement (100) zu übertragen, und wobei das Verbindungselement als Schraubmittel ausgebildet ist, wobei das Einstellbauteil in einen gelösten Zustand und in einen befestigten Zustand bringbar ist, wobei das Einstellbauteil (301) im gelösten Zustand verschiebbar ist und im befestigten Zustand durch ein Festziehen des Schraubmittels an den Tragerahmen bewegungsfest klemmbar ist.

## Beschreibung

Die Erfindung betrifft eine Einstellvorrichtung zum Verschwenken zumindest eines relevanten Bauteiles für einen Kraftfahrzeugschweinwerfer um eine erste und eine zweite Achse, umfassend
- ein Halteelement zur verschiebbaren Halterung des zumindest einen relevanten Bauteils, welches Halteelement eine erste Gleitfläche eines Flächenpaares umfasst, welche als Teil einer Kugelfläche ausgebildet ist,
- einen Tragerahmen zur Aufnahme des Halteelements, wobei der Tragerahmen ein zweite Gleitfläche des Flächenpaares umfasst, welche als Teil einer Kugelfläche und korrespondierend zur ersten Gleitfläche ausgebildet ist, wobei das Halteelement mittels einer Lagereinrichtung derart in dem Tragerahmen gelagert ist, dass die erste Gleitfläche des Halteelements entlang der zweiten Gleichfläche des Tragerahmens um die erste und die zweite Achse verschiebbar ist,
- eine Justiereinrichtung zum Verschwenken des relevanten Bauteils um die erste und die zweite Achse, welche Justiereinrichtung ein Einstellbauteil und eine erste Verstelleinrichtung und eine zweite Verstelleinrichtung aufweist, welche erste und zweite Verstelleinrichtung an dem Einstellbauteil angeordnet sind, wobei das Einstellbauteil mit dem Halteelement mechanisch mittels eines Verbindungselements verbunden ist.

Die Erfindung betrifft weiters eine Beleuchtungsvorrichtung für einen Kraftfahrzeugscheinwerfer, umfassend zumindest eine erfindungsgemäße Einstellvorrichtung.

Die Erfindung betrifft ferner eine Sensorvorrichtung für einen Kraftfahrzeugscheinwerfer, umfassend zumindest eine erfindungsgemäße Einstellvorrichtung sowie ein als Sensor ausgebildetes relevantes Bauteil.

Die Erfindung betrifft weiters einen Kraftfahrzeugscheinwerfer mit zumindest einer erfindungsgemäßen Beleuchtungsvorrichtung und/oder zumindest einer erfindungsgemäßen Sensorvorrichtung.

Einstellsysteme sind aus dem Stand der Technik bekannt und werden bei Kraftfahrzeugscheinwerfern häufig eingesetzt, um die vertikale Auslenkung (beispielsweise Leuchtweitenregulierung) oder die horizontale Auslenkung (Grundeinstellung oder beispielsweise Kurvenlicht) einer Lichtverteilung einzustellen.

Einstellsysteme sollen einerseits eine zuverlässige Verstellung eines relevanten Bauteils ermöglichen, andererseits soll der Platzbedarf solcher Einstellsysteme minimiert werden, um die Konzeption eines Kraftfahrzeugscheinwerfers möglichst wenig einzuschränken.

Bisherige Einstellsysteme weisen zumeist ein Verstelldreieck mit einem Fixlagerpunkt und zwei Angriffspunkten auf, wobei durch die Verbindung aus Fixlagerpunkt und dem Angriffspunkt je eine Achse ausgebildet wird, und durch Verschieben der Angriffspunkte eine Verschwenkbewegung erzeugt wird. Solche Einstellsysteme weisen einen aufgrund der Ausbildung des Schwenkdreiecks gewissen Platzbedarf auf.

Es ist daher eine Aufgabe der Erfindung ein Einstellsystem zu schaffen, das einen verringerten Platzbedarf aufweist.

Diese Aufgabe wird dadurch gelöst, dass das Verbindungselement den Tragerahmen an der zweiten Gleitfläche über eine Öffnung des Tragerahmens durchsetzt, wobei das Verbindungselement dazu eingerichtet ist, eine Bewegung des Einstellbauteils auf das Halteelement zu übertragen, und wobei das Verbindungselement als Schraubmittel ausgebildet ist, wobei das Einstellbauteil in Verbindung mit dem Schraubmittel in einen gelösten Zustand und in einen befestigten Zustand bringbar ist, wobei das Einstellbauteil im gelösten Zustand durch die erste und die zweite Verstelleinrichtung verschiebbar ist, und das Einstellbauteil im befestigten Zustand durch ein Festziehen des Schraubmittels an den Tragerahmen bewegungsfest klemmbar ist.

Durch die Abkehr von einem klassischen Aufbau mit Verstellarmen und Lagerpunkten, die ein Verstelldreieck ausbilden, und stattdessen den erfindungsgemäßen Ersatz von entlang einer Kugelfläche verschiebbaren Halteelements kann das Bauvolumen eines Einstellsystems deutlich reduziert werden.

Als relevante Bauteile werden insbesondere Blenden, Lichtquellen, insbesondere LED und/oder Laserlichtquellen, Reflektoren, Linsen und/oder ganze Lichtmodule bzw. Baugruppen, oder Sensoren bzw. Lichtsensoren (Photodetektoren), etc. angesehen. Es können daher einzelne oder eine Mehrzahl dieser genannten Komponenten das relevante Bauteil ausbilden, welches mit Hilfe des Einstellsystems verstellbar ist.

Das Verstellen des relevanten Bauteils mittels der ersten Verstelleinrichtung erfolgt unabhängig von einem Verstellen mittels der zweiten Verstelleinrichtung, d.h. die Verstelleinrichtungen funktionieren unabhängig voneinander. Beide Verstelleinrichtungen sollen einander vorzugsweise nicht beeinflussen.

Zum Verschieben des Einstellbauteils - also im gelösten Zustand - wird das Schraubmittel gelöst, aber nur soweit, dass das Halteelement und das Einstellbauteil weiterhin miteinander verbunden sind, sich aber das Einstellbauteil verschieben lässt.

Wird nun die Klemmung - also der befestigte Zustand - so weit gelöst, dass das Haltelement und das Einstellbauteil miteinander noch (gelockert) verbunden sind, so kann das Einstellbauteil durch die erste und die zweite Verstelleinrichtung verschoben werden.

Es kann vorgesehen sein, dass die Lagereinrichtung ein erstes und ein zweites Lagerungsmittel umfasst, welche miteinander in mechanischem Eingriff stehen und eingerichtet sind, das Halteelement an dem Tragerahmen drehbar um die erste und die zweite Achse zu lagern, wobei das erste Lagerungsmittel an dem Halteelement und das zweite Lagerungsmittel an dem Tragerahmen angeordnet ist.

Es kann vorgesehen sein, dass das erste Lagerungsmittel als Vorsprünge und das zweite Lagerungsmittel als zu den jeweiligen Vorsprüngen korrespondierende Ausnehmungen, vorzugsweise längliche Ausnehmungen, ausgebildet sind, wobei die Vorsprünge in den jeweiligen Ausnehmungen gelagert sind.

Es kann vorgesehen sein, dass jeweils zwei Vorsprünge des Haltelements entlang der ersten Achse auf sich gegenüberliegenden Seiten des Halteelements erstrecken.

Es kann vorgesehen sein, dass die jeweils zwei Vorsprünge, welche auf gegenüberliegende Seiten des Halteelements angeordnet sind, die erste Achse bilden, wobei sich bei einem Verdrehen der Halteelements um die zweite Achse die erste Achse und somit die zwei Vorsprünge um die zweite Achse gleichsam mitbewegt werden, wobei sich die Vorsprünge in den dafür entsprechenden Ausnehmungen gedreht bzw. bewegt werden.

Es kann vorgesehen sein, dass zumindest ein Vorsprung, insbesondere genau ein Vorsprung, vorzugsweise zwei Vorsprünge, des Haltelements entlang der zweiten Achse angeordnet sind.

Es kann vorgesehen sein, dass die erste Verstelleinrichtung ein in Bezug auf den Tragerahmen feststehendes Übertragungselement und ein mit dem Übertragungselement in mechanischen Eingriff stehendes Stellelement umfasst, wobei das Stellelement eingerichtet ist an dem Einstellbauteil mittels eines Kopplungselements anzugreifen, und wobei das Stellelement einen Gewindeabschnitt und das Übertragungselement einen zum Gewindeabschnitt korrespondierenden Gegengewindeabschnitt aufweist, wobei das Stellelement mittels des Gegengewindeabschnittes in dem Übertragungselement dreh- und verschiebbar gelagert ist, wobei das Übertragungselement in Kombination mit dem Stellelement dazu eingerichtet ist, eine Drehbewegung des Stellelements in eine Schiebebewegung entlang einer ersten Verschubachse zu wandeln, wobei eine Schiebebewegung des Stellelements der ersten Verstelleinrichtung entlang der ersten Verschubachse ein Verschwenken des Halteelements um die erste Achse bewirkt.

Es kann vorgesehen sein, dass die zweite Verstelleinrichtung ein in Bezug auf den Tragerahmen feststehendes Übertragungselement und ein mit dem Übertragungselement in mechanischen Eingriff stehendes Stellelement umfasst, wobei das Stellelement eingerichtet ist an dem Einstellbauteil mittels einem Kopplungselement anzugreifen, und wobei das Stellelement einen Gewindeabschnitt und das Übertragungselement einen zum Gewindeabschnitt korrespondierenden Gegengewindeabschnitt aufweist, wobei das Stellelement mittels des Gegengewindeabschnittes in dem Übertragungselement dreh- und verschiebbar gelagert ist, wobei das Übertragungselement in Kombination mit dem Stellelement dazu eingerichtet ist, eine Drehbewegung des Stellelements in eine Schiebebewegung entlang einer zweiten Verschubachse zu wandeln, wobei eine Schiebebewegung des Stellelements der zweiten Verstelleinrichtung entlang der zweiten Verschubachse ein Verschwenken des Halteelements um die zweite Achse bewirkt.

Es kann vorgesehen sein, dass das Kopplungselement je Stellelement in einer Führungseinrichtung des Einstellbauteils gelagert ist, welche Führungseinrichtung eine Führungsnut aufweist und eingerichtet ist, bei einer Verschiebung des Einstellbauteils in einer orthogonal zur entsprechenden Verschubachse des Stellelements stehenden Richtung das Kopplungselement in der Führungsnut entlang dieser Richtung zu führen.

Es kann vorgesehen sein, dass das Stellelement als Schraube ausgebildet ist, wobei das Kopplungselement als Kugelkopf ausgebildet ist, vorzugsweise handelt es sich um eine Kugelkopfschraube.

Es kann vorgesehen sein, dass die Führungsnut einen kreisbogenförmigen Verlauf aufweist, vorzugsweise korrespondierend mit der ersten und der zweiten Gleitfläche.

Dies hat den Vorteil, dass sich die jeweiligen Stellelemente der ersten und der zweiten Verstelleinrichtung bei einer Bewegung des Einstellbauteils nicht in den Führungsnuten verhaken bzw. festklemmen, sodass eine weitere Bewegung des Einstellbauteils möglich ist.

Es kann vorgesehen sein, dass die erste und die zweite Achse orthogonal zueinander angeordnet sind, wobei vorzugsweise sich die erste und die zweite Achse schneiden und einen gemeinsamen Schnittpunkt bilden.

Vorzugsweise weist das relevante Bauteil eine für die jeweilige Benutzung des relevanten Bauteils relevante Seite bzw. Seitenfläche auf.

Es kann weiterhin vorgesehen sein, dass der Schnittpunkt der sich schneidenden ersten und zweiten Achse auf der relevanten Seite bzw. Seitenfläche des relevanten Bauteils angeordnet ist. Vorzugsweise ist das relevante Bauteil hierbei eine Sensoreinrichtung bzw. ein Sensor, wobei der Sensor eine Sensorfläche aufweist, um beispielsweise Photonen zu detektieren.

Hierbei liegt der Schnittpunkt der ersten und der zweiten Achse auf der Sensorfläche, vorzugsweise im geometrischen Zentrum dieser Sensorfläche.

Eine Schwenkbewegung - um die erste und/ oder zweite Achse - führt in diesem Fall dazu, dass der Punkt der Sensorfläche, in welchem der Schnittpunkt angeordnet ist, lediglich die Orientierung, nicht aber die Position verändert.

Es kann vorgesehen sein, dass die erste und die zweite Verschubachse orthogonal zueinander angeordnet sind.

Die Aufgabe wird ebenso gelöst mit einer Beleuchtungsvorrichtung für einen Kraftfahrzeugscheinwerfer, umfassend zumindest eine Einstellvorrichtung sowie ein relevantes Bauteil.

Die Aufgabe wird ebenso gelöst mit einer Sensorvorrichtung für einen Kraftfahrzeugscheinwerfer, umfassend zumindest eine Einstellvorrichtung sowie ein als Sensor ausgebildetes relevantes Bauteil.

Die Aufgabe wird ebenso gelöst mit einem Kraftfahrzeugscheinwerfer mit zumindest einer Beleuchtungsvorrichtung und/ oder zumindest einer Sensorvorrichtung.

Nachfolgend wird die Erfindung anhand von beispielhaften Zeichnungen näher erläutert. Hierbei zeigt
Fig. 1 eine Explosionsansicht einer beispielhaften Einstellvorrichtung,
Fig. 2 eine perspektivische Ansicht der beispielhaften Einstellvorrichtung in einem zusammengebauten Zustand von seitlich hinten,
Fig. 3 eine perspektivische Ansicht von vorne unten der Einstellvorrichtung aus Fig. 2, und
Fig. 4 eine perspektivische Ansicht von vorne seitlich der Einstellvorrichtung aus Fig. 2.

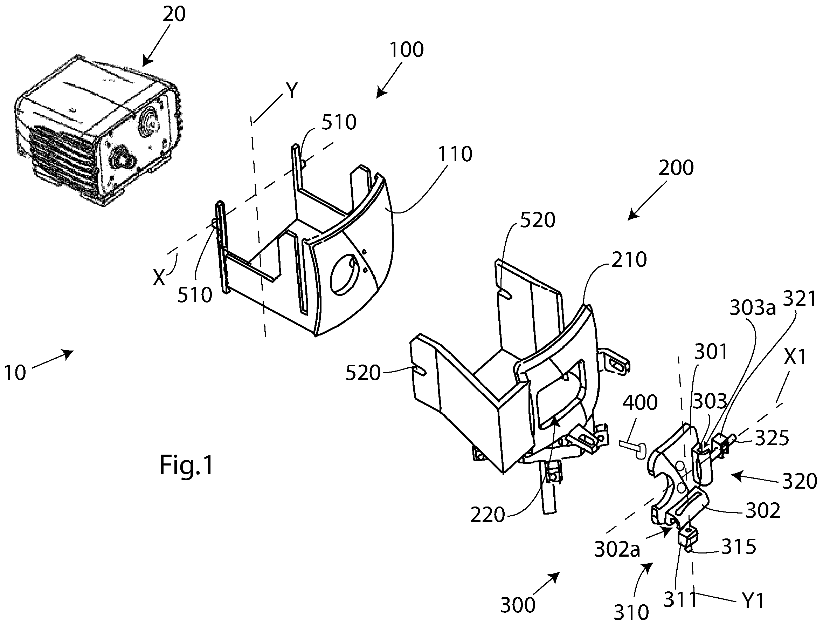

**Fig. 1** zeigt eine beispielhafte Einstellvorrichtung **10** zum Verschwenken eines relevanten Bauteiles **20** für einen Kraftfahrzeugschweinwerfer um eine erste und eine zweite Achse **X**, **Y** in einer Explosionsansicht.

Die Einstellvorrichtung **10** umfasst ein Halteelement **100** zur verschiebbaren Halterung des zumindest einen relevanten Bauteils **20**, welches in dem gezeigten Beispiel als Sensor ausgebildet ist, wobei das Halteelement **100** eine erste Gleitfläche **110** eines Flächenpaares umfasst, welche als Teil einer Kugelfläche ausgebildet ist. Die erste Gleitfläche **110** ist in **Fig. 1** nur von hinten zu sehen.

Ferner umfasst die Einstellvorrichtung **10** einen Tragerahmen **200** zur Aufnahme des Halteelements **100**, wobei der Tragerahmen **200** ein zweite Gleitfläche **210** des Flächenpaares umfasst, welche als Teil einer Kugelfläche und korrespondierend zur ersten Gleitfläche **110** ausgebildet ist, wobei das Halteelement **100** mittels einer Lagereinrichtung derart in dem Tragerahmen **200** gelagert ist, dass die erste Gleitfläche **110** des Halteelements **100** entlang der zweiten Gleichfläche **210** des Tragerahmens **200** um die erste und die zweite Achse **X**, **Y** verschiebbar ist.

Die Lagereinrichtung umfasst hierbei ein erstes und ein zweites Lagerungsmittel **510**, **520**, welche miteinander in mechanischem Eingriff stehen und eingerichtet sind, das Halteelement **100** an dem Tragerahmen **200** drehbar um die erste und die zweite Achse **X**, **Y** zu lagern, wobei das erste Lagerungsmittel **510** an dem Halteelement **100** und das zweite Lagerungsmittel **520** an dem Tragerahmen **200** angeordnet ist. In dem gezeigten Beispiel in den Figuren ist das erste Lagerungsmittel als Vorsprünge **510** und das zweite Lagerungsmittel als zu den jeweiligen Vorsprüngen **510** korrespondierende längliche Ausnehmungen **520** ausgebildet, wobei die Vorsprünge **510** in einem zusammengebauten Zustand der Einstellvorrichtung **10** in den jeweiligen Ausnehmungen **520** gelagert sind, siehe hierzu die übrigen Figuren.

Ferner erstrecken sich jeweils zwei Vorsprünge **510** des Haltelements **100** entlang der ersten Achse **X** auf sich gegenüberliegenden Seiten des Halteelements **100** bzw. bilden diese Vorsprünge **510** die erste Achse **X**, wobei sich bei einem Verdrehen bzw. Verschwenken des Halteelements **100** um die zweite Achse **Y** die erste Achse **X** und somit die erwähnten zwei Vorsprünge **510** gleichsam mitbewegt werden. Hierbei verschieben sich die Vorsprünge **510** in den entsprechenden und dafür vorgesehenen Ausnehmungen **520**.

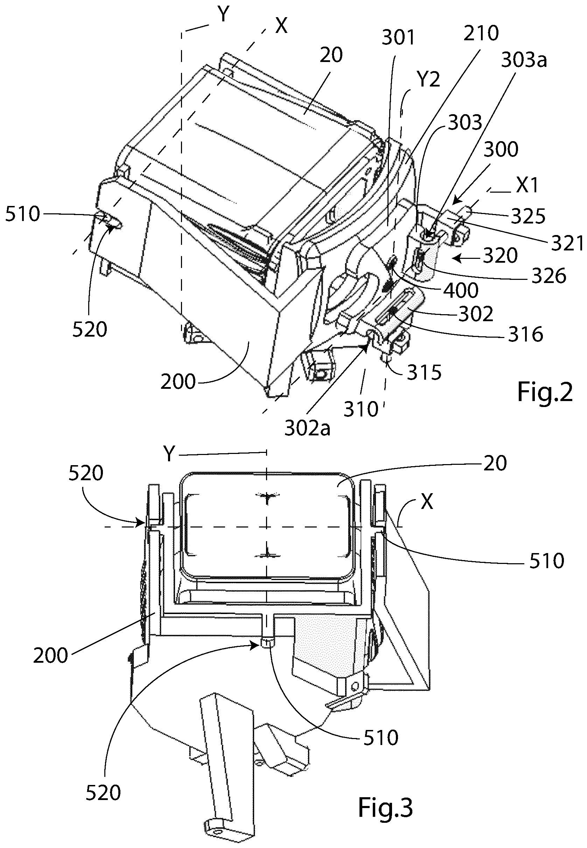

In **Fig. 1** nicht zu sehen, jedoch in **Fig. 3** ist der eine Vorsprung **510**, welcher sich auf der Unterseite des Haltelements **100** befindet und sich entlang der zweiten Achse **Y** erstreckt, wobei sich bei einem Verdrehen bzw. Verschwenken des Halteelements **100** um die erste Achse **X** die zweite Achse **Y** und somit der erwähnte eine Vorsprung **510** gleichsam mitbewegt wird. Hierbei verschiebt sich der Vorsprung **510** in der entsprechenden und dafür vorgesehenen Ausnehmung **520**.

Zum Verschwenken des Sensors **20** bzw. des Halteelements **100** um die erste und die zweite Achse **X**, **Y** umfasst die Einstellvorrichtung **10** ferner eine Justiereinrichtung **300**, welche Justiereinrichtung **300** ein Einstellbauteil **301** und eine erste Verstelleinrichtung **310** und eine zweite Verstelleinrichtung **320** aufweist, welche erste und zweite Verstelleinrichtung **310**, **320** an dem Einstellbauteil **301** angeordnet sind, wobei das Einstellbauteil **301** mit dem Halteelement **100** mechanisch mittels eines Verbindungselements **400** verbunden ist.

Das Verbindungselement **400** durchsetzt den Tragerahmen **200** an der zweiten Gleitfläche **210** über eine Öffnung **220** des Tragerahmens **200**, wobei das Verbindungselement **400** dazu eingerichtet ist, eine Bewegung des Einstellbauteils **301** auf das Halteelement **100** zu übertragen, hierbei ist das Verbindungselement **400** als starrer Körper ausgebildet.

Ferner ist das Verbindungselement **400** als Schraubmittel ausgebildet ist, wobei das Einstellbauteil **301** in Verbindung mit dem Schraubmittel **400** in einen gelösten Zustand und in einen befestigten Zustand bringbar ist. Im gelösten Zustand ist das Einstellbauteil **301** durch die erste und die zweite Verstelleinrichtung **310**, **320** verschiebbar. Im befestigten Zustand ist das Einstellbauteil **301** durch ein Festziehen des Schraubmittels **400** an den Tragerahmen **200** bewegungsfest klemmbar, wobei die zweite Gleitfläche **210** des Tragerahmens beim Festziehen des Schraubmittels **400** von dem Halteelement **100** bzw. von der ersten Gleitfläche **110** von der einen Seite und von dem Einstellbauteil **301** von der gegenüberliegenden Seite eingeklemmt wird.

**Fig. 2** zeigt einen zusammengebauten Zustand der Einstellvorrichtung **10** in einer perspektivischen Ansicht von hinten seitlich, wobei die Justiervorrichtung **300** und die erste und zweite Verstelleinrichtung **310**, **320** besser zu sehen ist.

Die erste Verstelleinrichtung **310** umfasst ein in Bezug auf den Tragerahmen **200** feststehendes Übertragungselement **311** und ein mit dem Übertragungselement **311** in mechanischen Eingriff stehendes Stellelement **315**. Das Stellelement **315** ist eingerichtet, an dem Einstellbauteil **301** mittels eines Kopplungselements **316** anzugreifen, wobei das Stellelement **315** einen Gewindeabschnitt und das Übertragungselement **311** einen zum Gewindeabschnitt korrespondierenden Gegengewindeabschnitt aufweist. Das Stellelement **315** ist dabei mittels des Gegengewindeabschnittes in dem Übertragungselement **311** dreh- und verschiebbar gelagert, wobei das Übertragungselement **311** in Kombination mit dem Stellelement **315** dazu eingerichtet ist, eine Drehbewegung des Stellelements **315** in eine Schiebebewegung entlang einer ersten Verschubachse **Y1** zu wandeln, wobei eine Schiebebewegung des Stellelements **315** der ersten Verstelleinrichtung **310** entlang der ersten Verschubachse **Y1** ein Verschwenken des Halteelements **100** um die erste Achse **X** bewirkt.

Die zweite Verstelleinrichtung **320** umfasst ein in Bezug auf den Tragerahmen **200** feststehendes Übertragungselement **321** und ein mit dem Übertragungselement **321** in mechanischen Eingriff stehendes Stellelement **325**. Das Stellelement **325** ist eingerichtet, an dem Einstellbauteil **301** mittels einem Kopplungselement **326** anzugreifen, wobei das Stellelement **325** einen Gewindeabschnitt und das Übertragungselement **321** einen zum Gewindeabschnitt **326** korrespondierenden Gegengewindeabschnitt aufweist. Das Stellelement **325** ist dabei mittels des Gegengewindeabschnittes in dem Übertragungselement **321** dreh- und verschiebbar gelagert, wobei das Übertragungselement **321** in Kombination mit dem Stellelement **325** dazu eingerichtet ist, eine Drehbewegung des Stellelements **325** in eine Schiebebewegung entlang einer zweiten Verschubachse **X1** zu wandeln, wobei eine Schiebebewegung des Stellelements **325** der zweiten Verstelleinrichtung **320** entlang der zweiten Verschubachse **X1** ein Verschwenken des Halteelements **100** um die zweite Achse **Y** bewirkt.

Bei der ersten und der zweiten Verstelleinrichtung **310**, **320** ist das Kopplungselement **316**, **326** je Stellelement **315**, **325** in einer Führungseinrichtung **302**, **303** des Einstellbauteils **301** gelagert. Die Führungseinrichtung **302**, **303** je Stellelement **315**, **325** weist hierbei eine Führungsnut **302a**, **303a** auf, welche einen kreisbogenförmigen Verlauf aufweist und eingerichtet ist, bei einer Verschiebung des Einstellbauteils **301** in einer orthogonal zur entsprechenden Verschubachse **X1**, **Y1** des Stellelements **315**, **325** stehenden Richtung das Kopplungselement **316**, **326** in der Führungsnut **302a**, **303a** entlang dieser Richtung zu führen. Die erste und die zweite Verschubachse **Y1**, **X1** sind dabei orthogonal zueinander angeordnet.

In dem in den Figuren gezeigten Beispiel sind die Stellelemente **315**, **325** als Schraube ausgebildet, wobei das jeweilige Kopplungselement **316**, **326** als Kugelkopf ausgebildet ist, vorzugsweise handelt es sich um eine Kugelkopfschraube.

**Fig. 3** zeigt die Einstellvorrichtung **10** in einem zusammengebauten Zustand in einer perspektivischen Vorderansicht, wobei zu erkennen ist, dass die erste und die zweite Achse **X**, **Y** orthogonal zueinander angeordnet sind, wobei sich die erste und die zweite Achse **X**, **Y** schneiden und einen gemeinsamen Schnittpunkt bilden.

Der Schnittpunkt der sich schneidenden ersten und zweiten Achse **X**, **Y** ist dabei auf einer Sensorfläche des Sensors **20** angeordnet. Die Sensorfläche ist beispielsweise jene Fläche, welche Photonen detektieren kann. Im gezeigten Beispiel in **Fig. 3** liegt der Schnittpunkt im geometrischen Zentrum dieser Sensorfläche.

Eine Schwenkbewegung - um die erste und/ oder zweite Achse - führt in diesem Fall dazu, dass der Punkt der Sensorfläche, in welchem der Schnittpunkt angeordnet ist, lediglich die Orientierung, nicht aber die Position verändert.

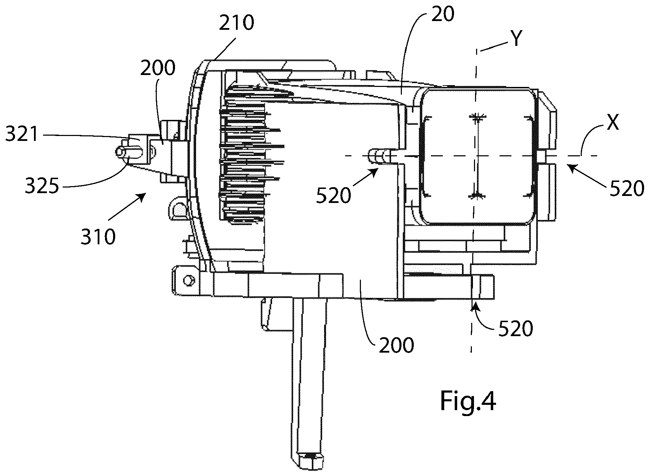

**Fig. 4** zeigt eine perspektivisch seitliche Ansicht der zusammengebauten Einstellvorrichtung **10**.

Es sei angemerkt, dass Begriffe wie "oben", "unten", "seitlich" und "hinten" in Bezug auf eine ordnungsgemäß eingebaute Einstellvorrichtung in einem Kraftfahrzeugscheinwerfer zu verstehen sind.

## Patentansprüche

1. Einstellvorrichtung (10) zum Verschwenken zumindest eines relevanten Bauteiles (20) für einen Kraftfahrzeugschweinwerfer um eine erste und eine zweite Achse (X, Y), umfassend
- ein Halteelement (100) zur verschiebbaren Halterung des zumindest einen relevanten Bauteils (20), welches Halteelement (100) eine erste Gleitfläche (110) eines Flächenpaares umfasst, welche als Teil einer Kugelfläche ausgebildet ist,
- einen Tragerahmen (200) zur Aufnahme des Halteelements (100), wobei der Tragerahmen (200) ein zweite Gleitfläche (210) des Flächenpaares umfasst, welche als Teil einer Kugelfläche und korrespondierend zur ersten Gleitfläche (110) ausgebildet ist, wobei das Halteelement (100) mittels einer Lagereinrichtung derart in dem Tragerahmen (200) gelagert ist, dass die erste Gleitfläche (110) des Halteelements (100) entlang der zweiten Gleichfläche (210) des Tragerahmens (200) um die erste und die zweite Achse (X, Y) verschiebbar ist,
- eine Justiereinrichtung (300) zum Verschwenken des relevanten Bauteils (20) um die erste und die zweite Achse (X, Y), welche Justiereinrichtung (300) ein Einstellbauteil (301) und eine erste Verstelleinrichtung (310) und eine zweite Verstelleinrichtung (320) aufweist, welche erste und zweite Verstelleinrichtung (310, 320) an dem Einstellbauteil (301) angeordnet sind, wobei das Einstellbauteil (301) mit dem Halteelement (100) mechanisch mittels eines Verbindungselements (400) verbunden ist,
**dadurch gekennzeichnet, dass**
das Verbindungselement (400) den Tragerahmen (200) an der zweiten Gleitfläche (210) über eine Öffnung (220) des Tragerahmens (200) durchsetzt, wobei das Verbindungselement (400) dazu eingerichtet ist, eine Bewegung des Einstellbauteils (301) auf das Halteelement (100) zu übertragen, und wobei das Verbindungselement als Schraubmittel ausgebildet ist, wobei das Einstellbauteil in Verbindung mit dem Schraubmittel in einen gelösten Zustand und in einen befestigten Zustand bringbar ist, wobei das Einstellbauteil (301) im gelösten Zustand durch die erste und die zweite Verstelleinrichtung (310, 320) verschiebbar ist, und das Einstellbauteil (301) im befestigten Zustand durch ein Festziehen des Schraubmittels an den Tragerahmen (200) bewegungsfest klemmbar ist.

2. Einstellvorrichtung nach Anspruch 1, **dadurch gekennzeichnet, dass** die Lagereinrichtung ein erstes und ein zweites Lagerungsmittel (510, 520) umfasst, welche miteinander in mechanischem Eingriff stehen und eingerichtet sind, das Halteelement (100) an dem Tragerahmen (200) drehbar um die erste und die zweite Achse (X, Y) zu lagern, wobei das erste Lagerungsmittel (510) an dem Halteelement (100) und das zweite Lagerungsmittel (520) an dem Tragerahmen (200) angeordnet ist.

3. Einstellvorrichtung nach Anspruch 2, **dadurch gekennzeichnet, dass** das erste Lagerungsmittel als Vorsprünge (510) und das zweite Lagerungsmittel als zu den jeweiligen Vorsprüngen (510) korrespondierende Ausnehmungen (520), vorzugsweise längliche Ausnehmungen, ausgebildet sind, wobei die Vorsprünge (510) in den jeweiligen Ausnehmungen (520) gelagert sind.

4. Einstellvorrichtung nach einem der Ansprüche 1 bis 3, **dadurch gekennzeichnet, dass** die erste Verstelleinrichtung (310) ein in Bezug auf den Tragerahmen (200) feststehendes Übertragungselement (311) und ein mit dem Übertragungselement (311) in mechanischen Eingriff stehendes Stellelement (315) umfasst, wobei das Stellelement (315) eingerichtet ist an dem Einstellbauteil (301) mittels eines Kopplungselements (316) anzugreifen, und wobei das Stellelement (315) einen Gewindeabschnitt und das Übertragungselement (311) einen zum Gewindeabschnitt korrespondierenden Gegengewindeabschnitt aufweist, wobei das Stellelement (315) mittels des Gegengewindeabschnittes in dem Übertragungselement (311) dreh- und verschiebbar gelagert ist, wobei das Übertragungselement (311) in Kombination mit dem Stellelement (315) dazu eingerichtet ist, eine Drehbewegung des Stellelements (315) in eine Schiebebewegung entlang einer ersten Verschubachse (Y1) zu wandeln, wobei eine Schiebebewegung des Stellelements (315) der ersten Verstelleinrichtung (310) entlang der ersten Verschubachse (Y1) ein Verschwenken des Halteelements (100) um die erste Achse (X) bewirkt.

5. Einstellvorrichtung nach einem der Ansprüche 1 bis 4, **dadurch gekennzeichnet, dass** die zweite Verstelleinrichtung (320) ein in Bezug auf den Tragerahmen (200) feststehendes Übertragungselement (321) und ein mit dem Übertragungselement (321) in mechanischen Eingriff stehendes Stellelement (325) umfasst, wobei das Stellelement (325) eingerichtet ist an dem Einstellbauteil (301) mittels einem Kopplungselement (326) anzugreifen, und wobei das Stellelement (325) einen Gewindeabschnitt und das Übertragungselement (321) einen zum Gewindeabschnitt (326) korrespondierenden Gegengewindeabschnitt aufweist, wobei das Stellelement (325) mittels des Gegengewindeabschnittes in dem Übertragungselement (321) dreh- und verschiebbar gelagert ist, wobei das Übertragungselement (321) in Kombination mit dem Stellelement (325) dazu eingerichtet ist, eine Drehbewegung des Stellelements (325) in eine Schiebebewegung entlang einer zweiten Verschubachse (X1) zu wandeln, wobei eine Schiebebewegung des Stellelements (325) der zweiten Verstelleinrichtung (320) entlang der zweiten Verschubachse (X1) ein Verschwenken des Halteelements (100) um die zweite Achse (Y) bewirkt.

6. Einstellvorrichtung nach Anspruch 5, **dadurch gekennzeichnet, dass** das Kopplungselement (316, 326) je Stellelement (315, 325) in einer Führungseinrichtung (302, 303) des Einstellbauteils (301) gelagert ist, welche Führungseinrichtung (302, 303) eine Führungsnut (302a, 303a) aufweist und eingerichtet ist, bei einer Verschiebung des Einstellbauteils (301) in einer orthogonal zur entsprechenden Verschubachse (X1, Y1) des Stellelements (315, 325) stehenden Richtung das Kopplungselement (316, 326) in der Führungsnut (302a, 303a) entlang dieser Richtung zu führen.

7. Einstellvorrichtung nach einem der Ansprüche 4 bis 6, **dadurch gekennzeichnet, dass** das Stellelement (315, 325) als Schraube ausgebildet ist, wobei das Kopplungselement (316, 326) als Kugelkopf ausgebildet ist.

8. Einstellvorrichtung nach Anspruch 6 oder 7, **dadurch gekennzeichnet, dass** die Führungsnut (302a, 303a) einen kreisbogenförmigen Verlauf aufweist.

9. Einstellvorrichtung nach einem der Ansprüche 1 bis 8, **dadurch gekennzeichnet, dass** die erste und die zweite Achse (X, Y) orthogonal zueinander angeordnet sind.

10. Einstellvorrichtung nach einem der Ansprüche 5 bis 9, **dadurch gekennzeichnet, dass** die erste und die zweite Verschubachse (Y1, X1) orthogonal zueinander angeordnet sind.

11. Beleuchtungsvorrichtung für einen Kraftfahrzeugscheinwerfer, umfassend zumindest eine Einstellvorrichtung nach einem der vorhergehenden Ansprüche sowie ein relevantes Bauteil.

12. Sensorvorrichtung für einen Kraftfahrzeugscheinwerfer, umfassend zumindest eine Einstellvorrichtung nach einem der vorhergehenden Ansprüche sowie ein als Sensor ausgebildetes relevantes Bauteil.

13. Kraftfahrzeugscheinwerfer mit zumindest einer Beleuchtungsvorrichtung gemäß Anspruch 11 und/oder zumindest einer Sensorvorrichtung gemäß Anspruch 12.
